# EUROPÄISCHE PATENTANMELDUNG

(11) **EP 2 196 756 A1**
(43) Veröffentlichungstag der Anmeldung: **16.06.2010**
(21) Anmeldenummer: 08021763.1
(22) Anmeldetag: 15.12.2008
(51) Int. Cl.: F26B 3/084, F26B 3/28, F26B 23/00

(54) **Vorrichtung zum Trocknen von Brennstoff**

(71) Anmelder: Siemens Aktiengesellschaft, 80333 München (DE)
(72) Erfinder: Beckmann, Dr. Björn, 47057 Duisburg (DE); Bergeron, Fabian, 90403 Nürnberg (DE); Beul, Ulrich, 45219 Essen (DE); Deidewig, Dr. Frank, 45149 Essen (DE); Huckriede, Dirk, 41352 Korschenbroich (DE); Kaufmann, Carsten, 45478 Mülheim a.d. Ruhr (DE); Koebe, Mario Dr., 45478 Mülheim a.d. Ruhr (DE); Kraus, Markus, 45468 Mülheim a.d. Ruhr (DE); Rollmann, Georg Dr., 47057 Duisburg (DE); Sievert, Roland Dr., 45147 Essen (DE); Steinfeld, Benedikt, 45468 Mülheim a.d. Ruhr (DE); Stiehm, Andreas, 53424 Remagen-Kripp (DE)

(57) **Zusammenfassung**

Die Erfindung geht aus von einer Vorrichtung (2) zum Trocknen von Brennstoff (4) mit einem Trockner (6) zur Aufnahme von körnigem und feuchtem Brennstoff (4) und einer Heizeinrichtung, die einen Wärmetauscher (18,20) zum Heizen des Brennstoffs (4) innerhalb des Trockners (6) aufweist.
Es wird vorgeschlagen, dass der Wärmetauscher (18,20) mit einer regenerativen Energiequelle (8,10) thermisch verbunden ist. Es kann eine Trocknung des Brennstoffs (4) bei geringem fossilen Energieverbrauch erreicht werden.

## Beschreibung

Die Erfindung betrifft eine Vorrichtung zum Trocknen von Brennstoff mit einem Trockner zur Aufnahme von körnigem und feuchtem Brennstoff und einer Heizeinrichtung, die einen Wärmetauscher zum Heizen des Brennstoffs innerhalb des Trockners aufweist.

In Kraftwerken zur Stromerzeugung, Heizkraftwerken, einer Kombination beider Typen oder anderen Industriefeuerungen werden Brennstoffe verbrannt, um die entstehende Verbrennungswärme dem Kraftwerkszweck entsprechend weiter zu verwenden. Brennstoffe mit einem hohen Wassergehalt, wie Rohbraunkohle oder Frästorf, sollten vor dem Verbrennen getrocknet werden, um eine gute Energieausnutzung des Brennstoffs zu erzielen.

In vielen bestehenden Kraftwerken und Industriefeuerungen erfolgt eine Trocknung durch eine integrierte Mahltrocknung, in der Trocknen und Mahlen des Brennstoffs zeit- und ortsgleich in entsprechenden Mühlen erfolgt. Als Trocknungsmedium wird heißes Rauchgas verwendet, das bei Temperaturen zwischen 900°C und 1000°C aus dem Feuerraum entnommen wird. Andere Methoden verwenden beheizte Kontakttrockner, wie Teller-, Röhren-, Scheiben- oder Wirbelschichttrockner, die die energetischen Vorteile einer Kraft-Wärme-Kopplung nutzen können oder Trommel-, Flugstrom- oder ebenfalls Wirbelschichttrockner, denen die für die Trocknung erforderliche Wärmeenergie mit heißen Gasen zugeführt wird, wie beispielsweise aus der WO 92/05393 A bekannt ist. Diesen Verfahren ist gemein, dass die zur Trocknung verwendete Energie einem Heiz- oder Kraftwerksprozess nicht mehr zur Verfügung steht

Zur Verbesserung der Brennstoffenergienutzung ist es außerdem bekannt, die Verdampfungsenergie des Brüden, also der mit Wasserdampf gesättigten Luft oder Gases, durch Wärmekopplung einschließlich seiner Kondensation teilweise zurück zu gewinnen.

Es ist eine Aufgabe der Erfindung, eine Vorrichtung zum Trocknen von Brennstoff anzugeben, mit der Brennstoff energetisch günstig getrocknet werden kann.

Diese Aufgabe wird durch eine Vorrichtung der eingangs genannten Art gelöst, bei der der Wärmetauscher erfindungsgemäß mit einer regenerativen Energiequelle thermisch verbunden ist. Es kann fossile Energie eingespart und ein hoher Wirkungsgrad - bezogen auf fossilen Brennstoff - erreicht werden.

In einer vorteilhaften Ausführungsform der Erfindung ist die regenerative Energiequelle eine Solarthermiequelle. Unter Solarthermie wird die Wärmegewinnung aus solarer Einstrahlung verstanden. Die Heizeinrichtung kann hierzu über Sonnenkollektoren verfügen, aus denen Wärme direkt oder über einen Wärmetauscher zum Wärmetauscher des Trockners gebracht wird.

Die Solarkollektoren können Vakuumröhrenkollektoren sein. Vakuumröhrenkollektoren arbeiten mit einer Betriebstemperatur von etwa 150 °C und geben ihre Wärme an ein flüssiges Wärmeträgermedium ab, das direkt oder über einen Wärmetauscher den Wärmetauscher des Trockners beheizen kann. Das Temperaturniveau ist hierbei ausreichend hoch, um eine effektive Trocknung des Brennstoffs zu ermöglichen.

Zum Erreichen höherer Arbeitstemperaturen sind Parabolrinnenkollektoren vorteilhaft, deren Wärmeträgermedium bis 500 °C erreichen kann. Das Wärmeträgermedium ist zweckmäßigerweise ein Thermoöl, das direkt an den Wärmetauscher, z.B. einen Flächenstrahler eines Wirbelschichttrockners, Wärme abgeben kann.

In einer weiteren vorteilhaften Ausgestaltung der Erfindung ist die regenerative Energiequelle eine Geothermiequelle. Die Geothermiequelle erschließt Erdwärme zur Trocknung des Brennstoffs und kann eine Bohrung in das Erdinnere umfassen, aus der ein flüssiges Wärmeträgermedium abgeführt wird. Mit Vorteil weist die Geothermiequelle ein petrothermales System auf. Solche Systeme sind zur Bereitstellung großer Energiemengen geeignet, da das Wärmeträgermedium - üblicherweise Wasser oder CO₂ - durch Gestein gepresst wird und somit eine sehr große Übertragungsfläche vom Gestein auf das Wärmeträgermedium vorhanden ist, die größer ist als bei geschlossenen Systemen.

In Gebieten, in denen hydrothermale Heiß- und Trockendampfvorkommen mit Temperaturen über 150 °C vorhanden sind, kann die Wärme aus der Geothermiequelle direkt zum Trocknen des Brennstoffs verwendet werden. In Regionen, in denen die üblichen Temperaturen von mit verhältnismäßigen Mitteln erreichbarem Tiefengestein oder geologischer Warmwasservorkommen niedriger liegt, ist es vorteilhaft, wenn der Wärmetauscher mit einer Geothermiequelle zum Vorheizen vorgesehen und mit einer weiteren Wärmequelle, z.B. einer Solarthermiequelle, zum Nachheizen thermisch verbunden ist. Hierdurch kann mengenmäßig viel Wärme aus der Erde auf einem niedrigen Temperaturniveau, z.B. zwischen 40 °C und 100 °C, zum Vorheizen verwendet werden, auch wenn eine zum Trocknen nötige Temperatur des Wärmeträgermediums höher liegt.

Vorteilhafterweise ist der Brennstoff Braunkohle. Braunkohle ist wegen ihrer großen Vorkommen und der vergleichsweise einfachen Gewinnung und Verfeuerung in Kraftwerken besonders gut zur Verstromung geeignet. Durch den Wassergehalt der Rohbraunkohle von 50% - 60% ist eine Trocknung der Braunkohle vor der Verfeuerung notwendig.

Ein aussichtsreiches und effektives Trocknungsverfahren stellt die Wirbelschichttrocknung dar. Sie zeichnet sich gegenüber anderen Verfahren, wie z.B. einer Mahltrocknung oder Röhrentrocknung durch bessere Wärmeübertragungseigenschaften aus. Weil der Wirbelschichttrockner während des Trocknungsvorgangs nicht bewegt wird, wie z.B. eine Trommel beim Röhrentrockner oder Druckstempel beim Entwässerungsverfahren, bietet sich die Möglichkeit, große Baueinheiten herzustellen, die wegen ihren großen Volumens besonders für den Betrieb in Kraftwerken geeignet sind.

In einem Wirbelschichttrockner wird Brennstoff, der üblicherweise zuvor auf eine Korngröße zwischen 1 mm und 10 mm zerkleinert wurde, mit einem Fluidisierungsmedium durchwirbelt, so dass sich ein so genanntes Wirbelbett bildet aus aufgewirbeltem, trocknendem Brennstoff. In dieses Wirbelbett aus getrocknetem bzw. teilweise getrocknetem Brennstoff wird feuchter Brennstoff zugegeben. Das Fluidisierungsmedium ist erwärmt, um während des Durchströmens durch das Wirbelbett möglichst viel Wasser aufnehmen zu können. Zum Aufheizen des Fluidisierungsmediums ist zweckmäßigerweise der Wärmetauscher vorgesehen.

Als zusätzlichen Wärmetauscher umfasst der Wirbelschichttrockner vorteilhafterweise eine Wärmetauscherfläche, an der der verwirbelte Brennstoff während des Trocknungsvorgangs entlang streicht. Diese Wärmetauscherfläche ist zweckmäßigerweise heißer als das Fluidisierungsmedium, so dass zwei Temperaturniveaus im Trockner vorhanden sind. Je nach Temperatur des von der regenerativen Energiequelle kommenden Wärmeträgermediums kann das Wärmeträgermedium zum Erwärmen im oberen oder unteren Temperaturniveau verwendet werden. Das andere Temperaturniveau kann beispielsweise mit Kraftwerkswärme gespeist werden. Hierzu umfasst das Kraftwerk zweckmäßigerweise einen Wärmeerzeuger, der mit dem Heizmittel thermisch verbunden ist.

In einer weiteren vorteilhaften Ausgestaltung der Erfindung umfasst die Vorrichtung einen ersten Wärmetauscher zum Abgeben von Wärme aus der regenerativen Energiequelle an einen Wärmeträger zum Heizen des Brennstoffs im Trockner und einen zweiten Wärmetauscher zum Nachheizen des Wärmeträgers mit Kraftwerksenergie. Auf diese Weise kann die regenerative Energie auch dann genutzt werden, wenn sie auf einem Temperaturniveau liegt, das zu niedrig für ein effektives Trocknen ist.

Insbesondere bei Verwendung von solarer Strahlung als Wärmequelle zum Trocknen des Brennstoffs steht je nach Wetter und Jahreszeit mehr oder weniger Wärme zur Verfügung. Da die benötigte Wärmemenge jedoch unabhängig von der Sonneneinstrahlung ist, muss gegebenenfalls mit dem Wärmeerzeuger des Kraftwerks ganz oder nachgeheizt werden. Zur Steuerung der geeigneten Wärmezufuhr zum Trockner umfasst die Vorrichtung zweckmäßigerweise ein Steuermittel zum Steuern einer Wärmezufuhr aus der regenerativen Energiequelle und vom Wärmeerzeuger zum Wärmetauscher in Abhängigkeit von einem Parameter der regenerativen Energie. Der Parameter kann eine Temperatur oder ein Fluss sein.

Je nach Temperatur des Wärmeträgermediums aus der regenerativen Energiequelle kann dieses zu einem geeigneten Wärmetauscher geführt werden, also zu Nieder- oder Mitteltemperatur-Wärmetauscher, zum Heizen des Fluidisierungsmediums oder der Wärmetauscherfläche.

Die Erfindung wird anhand von Ausführungsbeispielen näher erläutert, die in den Zeichnungen dargestellt sind.

Es zeigen:
FIG 1 eine Vorrichtung zum Trocknen von Brennstoff mit einem Wirbelschichttrockener und einer Solarthermiequelle und einer Geothermiequelle zum Versorgen des Wirbelschichttrockners mit Wärme und
FIG 2 ein Schema eines Wärmewegs zum Wirbelschichttrockener.

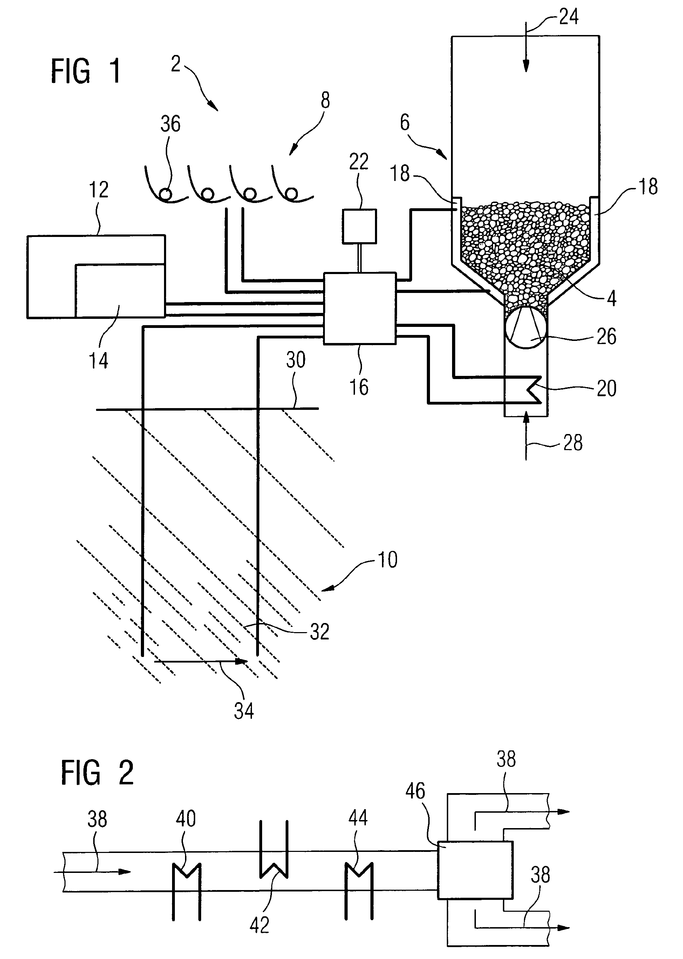

FIG 1 zeigt eine Vorrichtung 2 zum Trocknen von Brennstoff 4, z.B. Braunkohle, mit einem Wirbelschichttrockener 6, der thermische mit einer Solarthermiequelle 8 und einer Geothermiequelle 10 verbunden ist zum Versorgen des Wirbelschichttrockners 6 mit Wärme. An die Vorrichtung 2 angeschlossen ist ein Kraftwerk 12 mit einem Wärmeerzeuger 14, z.B. einer Dampfturbine bzw. einem Dampferzeuger der Dampfturbine, aus dem ein Wärmeträger, z.B. heißer Dampf, in die Vorrichtung 2 eingebracht werden kann. Ein Wärmeverteiler 16 ist zuwärmeseitig mit den regenerativen Wärmequellen 8, 10 und dem Wärmeerzeuger 14 und abwärmeseitig mit zwei Wärmetauschern 18, 20 des Wirbelschichttrockners 6 thermisch verbunden. Die Wärmeverteilung wird durch ein Steuermittel 22 gesteuert und/oder geregelt.

Zum Trocknen des Brennstoffs 4 wird dieser in einer nicht dargestellten Mühle zerkleinert und - wie durch einen Pfeil 24 angedeutet - von oben in den Trockner 6 eingebracht. Gleichzeitig wird durch ein Gebläse 26 von unten - wie durch einen Pfeil 28 angedeutet - ein Fluidisierungsmedium in den Trockner 6 eingeblasen, das den Brennstoff 4 in einem bewegten, wirbelndem Zustand hält. Durch das Fluidisierungsmedium wird der Brennstoff 4 erwärmt und getrocknet. Weitere Wärme wird durch den Wärmetauscher 18 auf den Brennstoff 4 übertragen, der als Wärmetauscherfläche ausgeführt ist, an der der Brennstoff in seiner Bewegung entlang geführt wird. Ausreichend trockener Brennstoff wird durch nicht dargestellte Öffnungen im Trockner 6 nach oben ausgeblasen.

In einem ersten Betriebsmodus der Vorrichtung 2 wird die Wärme für das Fluidisierungsmedium und den Wärmetauscher 18 aus dem Wärmeerzeuger 14 des Kraftwerks 12 in Form von Dampf geliefert. Der Dampf wird dem Wärmeerzeuger 14 bei z.B. 30 bar und ca. 300 °C entnommen und kann in einem Wärmetauscher des Wärmeverteilers 16 bis auf nahezu Sattdampftemperatur abgekühlt werden. Durch die Abkühlung entnommene Wärme wird im Wärmeverteiler 16 auf Thermoöl übertragen, das dadurch auf eine Temperatur von 250 °C aufgeheizt und dem Wärmetauscher 18 zugeführt wird. Anschließend wird der Dampf etwas entspannt und durch das Gebläse 26 dem Trockner 6 zugeführt, wo er auf den Betriebsdruck des Trockners 6 weiter entspannt wird, z.B. auf 2 bar. Der im Trockner 6 abgekühlte Dampf wird in einem Kreislauf über den Wärmeverteiler 16 zum Wärmeerzeuger 14 zurückgeführt. Die Trocknung kann alleine mit Wärme aus dem Wärmeerzeuger 14 ausgeführt werden.

In einem zweiten Modus der Vorrichtung 2 wird Wärme aus der Geothermiequelle 10 entnommen. Hierzu wird ein geeigneter Wärmeträger unter die Erdoberfläche 30 in heißes Gestein 32 gepresst, so dass er auf einer durch einen Pfeil 34 angedeuteten Wärmeaufnahmestrecke Wärme aus dem Gestein 32 aufnimmt. Der aufgeheizte Wärmeträger wird anschließend zum Wärmeverteiler 16 geführt, dort oder im Trockner 6 abgekühlt und im Kreislauf zur Geothermiequelle 10 zurückgeführt. In Abhängigkeit von Temperatur und Volumenstrom des Wärmeträgers entscheidet das Steuermittel 22 über die Verwendung der regenerativen Energie aus der Geothermiequelle 10 im Trockner 6.

In einem dritten Modus der Vorrichtung 2 wird Wärme aus der Solarthermiequelle 8 entnommen. Hierzu wird ein geeigneter Wärmeträger in Parabolrinnenkollektoren 36 geleitet und dort von Sonnenstrahlung aufgeheizt. Der heiße Wärmeträger wird zum Wärmeverteiler 16 geführt, dort oder im Trockner 6 abgekühlt und im Kreislauf zur Solarthermiequelle 8 zurückgeführt. In Abhängigkeit von Temperatur und Volumenstrom des Wärmeträgers entscheidet das Steuermittel 22 über die Verwendung der regenerativen Energie aus der Solarthermiequelle 8 im Trockner 6.

Ebenfalls möglich ist eine Kombination der drei Modi, so dass die drei Wärmequellen, also der Wärmeerzeuger 14 des Kraftwerks 12, die Geothermiequelle 10 und die Solarthermiequelle, 8 in beliebiger Kombination eingesetzt werden können.

Generell wird vom Steuermittel 22 über folgende Verwendungsmodi der Wärme aus den Wärmequellen entschieden, wobei weitere Modi möglich sind:
1. Ein Wärmetauscher 18, 20 wird alleine aus einer regenerativen Wärmequelle gespeist.
2. Beide Wärmetauscher 18, 20 werden alleine aus einer regenerativen Wärmequelle gespeist. Die Wärmeverteilung wird im Wärmeverteiler 16 durch das Steuermittel 22 gesteuert.
3. Beide Wärmetauscher 18, 20 werden alleine aus beiden regenerativen Wärmequellen gespeist, wobei eine der Wärmequellen einen Wärmetauscher 18, 20 und die andere Wärmequellen den anderen Wärmetauscher 18, 20 speist.
4. Beide Wärmetauscher 18, 20 werden alleine aus beiden regenerativen Wärmequellen gespeist, wobei beide Wärmequellen beide Wärmetauscher 18, 20 speisen. Die Wärmeverteilung wird im Wärmeverteiler 16 durch das Steuermittel 22 gesteuert.
5. Ein Wärmetauscher 18, 20 wird aus beiden regenerativen Wärmequelle gespeist. Hierbei kann ein Wärmeträger die Funktion einer Vorheizung und der andere Wärmeträger die Funktion einer Nachheizung des Wärmeträgers des Wärmetauschers 18, 20 übernehmen. Ebenfalls möglich ist es, den Wärmeträger der heißeren regenerativen Wärmequelle durch den Wärmeträger der kühleren regenerativen Wärmequelle vorzuheizen und vorgeheizt zur heißeren Wärmequelle zu schicken.
6. Zu jedem der fünf Verwendungsmodi wird zusätzlich Wärme aus dem Wärmeerzeuger 14 des Kraftwerks 12 beigesteuert. Eine entsprechende Wärmeverteilung bzw. Vor- und Nachheizung wird vom Steuermittel 22 gesteuert.

Ein Beispiel für Vor- und Nachheizungen ist in FIG 2 dargestellt. Gezeigt ist die Wärmeverteilung im Wärmeverteiler 16 anhand eines Ausschnitts eines Kreislaufs 38 eines Wärmeträgers zu einem oder beiden Wärmetauschern 18, 20. Der kühle Wärmeträger wird zunächst mittels eines ersten Wärmetauschers 40 erwärmt, der Wärme aus der Geothermiequelle 10 abgibt. Anschließend wird der Wärmeträger mittels eines zweiten Wärmetauschers 42 nacherwärmt, der Wärme aus der Solarthermiequelle 8 abgibt. Zuletzt wird der Wärmeträger mittels eines dritten Wärmetauschers 44 weiter nacherwärmt, der Wärme aus dem Wärmeerzeuger 14 des Kraftwerks 12 abgibt. Mit Hilfe eines Unterverteilers 46 kann der heiße Wärmeträger einem oder beiden Wärmetauschern 18, 20 zugeführt werden.

Ebenfalls möglich ist es, einen oder zwei Abzweige zwischen den Wärmetauschern 40, 42, 44 vorzusehen, so dass der Wärmeträger in einem kühleren Zustand an den kühleren der Wärmetauscher 18, 20 gegeben werden kann und weiter aufgeheizt an den anderen Wärmetauscher 18, 20.

## Patentansprüche

1. Vorrichtung (2) zum Trocknen von Brennstoff (4) mit einem Trockner (6) zur Aufnahme von körnigem und feuchtem Brennstoff (4) und einer Heizeinrichtung, die einen Wärmetauscher (18, 20) zum Heizen des Brennstoffs (4) innerhalb des Trockners (6) aufweist,
**dadurch gekennzeichnet, dass** der Wärmetauscher (18, 20) mit einer regenerativen Energiequelle thermisch verbunden ist.

2. Vorrichtung (2) nach Anspruch 1,
**dadurch gekennzeichnet, dass** die regenerative Energiequelle eine Solarthermiequelle (8) ist.

3. Vorrichtung (2) nach Anspruch 1 oder 2,
**dadurch gekennzeichnet, dass** die regenerative Energiequelle eine Geothermiequelle (10) ist.

4. Vorrichtung (2) nach einem der vorhergehenden Ansprüche,
**dadurch gekennzeichnet, dass** der Wärmetauscher (18, 20) mit einer Geothermiequelle (10) zum Vorheizen und einer solarthermiequelle (8) zum Nachheizen thermisch verbunden ist.

5. Vorrichtung (2) nach einem der vorhergehenden Ansprüche,
**dadurch gekennzeichnet, dass** der Brennstoff (4) Braunkohle ist.

6. Vorrichtung (2) nach einem der vorhergehenden Ansprüche,
**dadurch gekennzeichnet, dass** der Trockner (6) ein Wirbelschichttrockner zur Bildung eines Wirbelbetts aus getrocknetem Brennstoff (4) ist.

7. Vorrichtung (2) nach Anspruch 6,
**dadurch gekennzeichnet, dass** der Wirbelschichttrockener ein Mittel zum Einblasen eines Fluidisierungsmediums in den Brennstoff (4) aufweist und der Wärmetauscher 20 zum Aufheizen des Fluidisierungsmediums vorgesehen ist.

8. Vorrichtung (2) nach einem der vorhergehenden Ansprüche,
**gekennzeichnet durch** ihre Einbindung in ein Kraftwerk (12) mit einem Wärmeerzeuger (14), der mit den Wärmetauscher (18, 20) thermisch verbunden ist.

9. Vorrichtung (2) nach Anspruch 8,
**gekennzeichnet durch** einen ersten Wärmetauscher (40, 42) zum Abgeben von Wärme aus der regenerativen Energiequelle (8, 10) an einen Wärmeträger zum Heizen des Brennstoffs (4) im Trockner (6) und einen zweiten Wärmetauscher (44) zum Nachheizen des Wärmeträgers mit Kraftwerksenergie.

10. Vorrichtung (2) nach Anspruch 8 oder 9,
**gekennzeichnet durch** ein Steuermittel (22) zum Steuern einer Wärmezufuhr aus der regenerativen Energiequelle (8, 10) und vom Wärmeerzeuger (14) zum Wärmetauscher (18, 20) in Abhängigkeit von einem Parameter der regenerativen Energie.

11. Vorrichtung (2) nach Anspruch 10,
**dadurch gekennzeichnet, dass** der Parameter eine Temperatur oder ein Fluss ist.
